# EUROPEAN PATENT SPECIFICATION

(11) **EP 3 581 442 B1**
(45) Date of publication and mention of the grant of the patent: **30.12.2020**
(21) Application number: 18767249.8
(22) Date of filing: 20.02.2018
(51) Int. Cl.: B60R 21/207, B60R 21/2338

(54) **AIR BAG DEVICE**
AIRBAGVORRICHTUNG
DISPOSITIF DE COUSSIN DE SÉCURITÉ GONFLABLE

(30) Priority: 15.03.2017 JP 2017049676
(43) Date of publication of application: 18.12.2019
(73) Proprietor: Mazda Motor Corporation, Aki-gun, Hiroshima 730-8670 (JP)
(72) Inventor: YOSHIMURA, Mie, Aki-gun Hiroshima 730-8670 (JP); SHIBAHARA, Taei, Aki-gun Hiroshima 730-8670 (JP); NARIKAWA, Takahiro, Aki-gun Hiroshima 730-8670 (JP)
(74) Representative: Behr, Wolfgang
(86) International application number: PCT/JP2018/005982
(87) International publication number: WO 2018/168355

(56) References cited:
- JP-A- H04 176 749
- JP-A- H06 344 844
- JP-A- S49 111 334
- JP-A- 2009 149 236
- JP-A- 2011 057 142
- JP-A- 2013 035 437
- JP-A- 2017 144 841
- JP-A- 2017 222 331
- JP-Y1- S5 147 310
- US-A- 3 784 225
- US-A- 3 929 350
- US-A1- 2016 107 598

## Description

### TECHNICAL FIELD

The present invention relates to an air bag device for a vehicle provided with at least two rows of seats including a front seat and a rear seat arranged in a front-rear direction, and configured such that relative positions of the front seat and the rear seat in the front-rear direction are changeable, wherein the air bag device is mounted on a rear surface of a seatback of at least the front seat.

### BACKGROUND ART

A need for protecting passengers in a vehicle is increasing. There is a trend that an air bag for a rear seat passenger for protecting a passenger seated in a rear seat (rear-seat passenger) is provided. Among air bags for the rear seat passenger as described above, there is known an air bag, which is mounted on a seatback of a front seat, whose position in a front-rear direction is changeable.

However, unlike an air bag for a front seat passenger, in the air bag for the rear seat passenger of this type, when a front seat is retracted fully, a deploy position of the air bag may be too close to the rear seat passenger, and protection performance of the rear seat passenger may change depending on a position of the front seat. In other words, there is an issue that it is difficult to secure certain protection performance of the rear seat passenger without depending on the position of a front seat.

As an air bag for solving this issue, as exemplified in Japanese Unexamined Patent Application Publication No. JP H6-344844, an air bag of an annular shape in a side view and having a through cavity portion (a cavity portion) therein has been proposed.

The air bag of an annular shape in a side view as described in JP H6-344844 is designed in such a manner that even if the air bag is deployed near a rear seat passenger, the cavity portion collapses in an initial stage when the air bag contacts against the rear seat passenger, thereby protecting a passenger by an internal gas pressure, while alleviating an impact to the rear seat passenger.

However, in an air bag having a cavity portion therein in a side view as described in JP H6-344844, the cavity portion inside the air bag may not be properly formed, unless an internal pressure of the air bag is skillfully controlled. When an air bag is deployed near a rear seat passenger in a state that a cavity portion inside the air bag is not properly formed, protection performance of a passenger may not be secured.

Document JP 2013 035437 A shows an air bag device according to the preamble of claim 1. Further air bag devices are known from US 3 784 225 A, US 2016/107598 A1 and US 3 929 350 A.

### SUMMARY OF INVENTION

In view of the above, an object of the present invention is to provide an air bag device that enables to easily keep a cavity portion inside an air bag, even when the air bag is deployed in such a way as to have the cavity portion therein in a vehicle side view.

This object is solved by an air bag device according to claim 1. Claim 2 is directed to a preferred embodiment.

The present invention is directed to an air bag device for a vehicle provided with at least two rows of seats including a front seat and a rear seat arranged in a front-rear direction, and configured such that relative positions of the front seat and the rear seat in the front-rear direction are changeable. The air bag device is mountable on a rear surface of a seatback of at least the front seat. The air bag device includes an air bag which is deployed rearwardly into a shape having a cavity portion therein in a vehicle side view by gas to be supplied from an inflator. The air bag includes a shape holding means for holding the air bag itself in a shape having the cavity portion therein against a gas pressure of an inner space of the air bag, when being deployed.

### BRIEF DESCRIPTION OF DRAWINGS

FIG. 1 is a perspective view illustrating a deployed state of an air bag device according to a first embodiment, which is mounted on an upper portion of a rear surface of a front seat.
FIG. 2 is a perspective view of essential parts of an internal structure of the front seat on which the air bag device is mounted, when viewed from a rear side.
FIG. 3 is an exploded perspective view of the air bag device illustrated in FIG. 2.
FIG. 4 is a left side view illustrating a deployed state of the air bag device.
FIG. 5 is a cross-sectional view taken along the line A-A in FIG. 4.
FIG. 6 is a perspective view of the air bag device illustrating a state before a cavity covering cloth is attached.
FIG. 7 is a rear view of the air bag device illustrating a state that the cavity covering cloth is detached.
FIG. 8A is a cross-sectional view taken along the line B-B in FIG. 7.
FIG. 8B is a cross-sectional view taken along the line C-C in FIG. 7.
FIG. 9A is an operation explanatory diagram of the air bag device, when a front seat is in an ordinary position with respect to a rear seat passenger.
FIG. 9B is an operation explanatory diagram of the air bag device, when the front seat 100F is proximate to the rear seat passenger.
FIG. 10 is a characteristic diagram of the air bag device according to the present embodiment illustrating a relationship between load exerted to a passenger when the air bag contacts against the passenger, and displacement in the case of FIG. 9A.
FIG. 11 is a perspective view of an air bag device according to a second embodiment, not covered by claim 1, which is mounted on an upper portion of a rear surface of a front seat.
FIG. 12 is an explanatory diagram of an internal configuration of an air bag, in which a part of a sheet for forming an outer surface of the air bag is omitted in FIG. 11.
FIG. 13 is a left side view of the air bag device.
FIG. 14 is a cross-sectional view of an air bag device according to a third embodiment (a cross-sectional view associated with the A-A section in FIG. 4).
FIG. 15 is an exploded perspective view of the air bag device (a state that an air bag is disassembled into bag portions).
FIG. 16 is an external view illustrating a deployed state of a conventional air bag in which a shape holding means is not provided.

### DESCRIPTION OF EMBODIMENTS

In the following, embodiments of the present invention are described in detail with reference to the drawings.

### (First Embodiment)

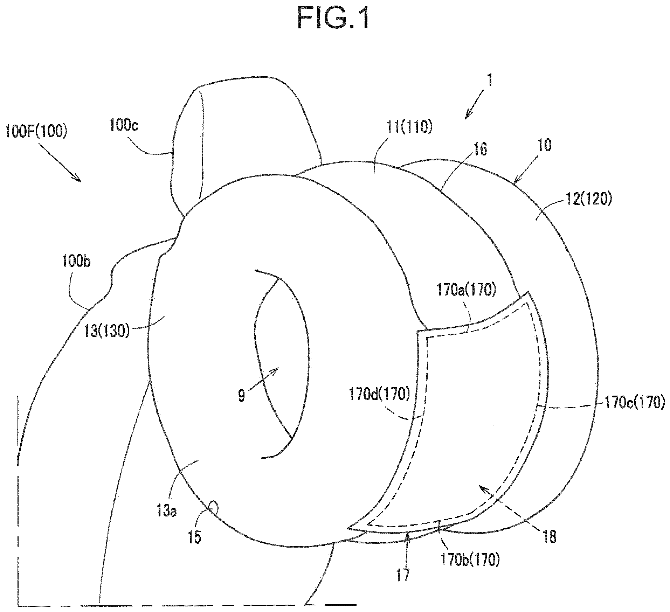

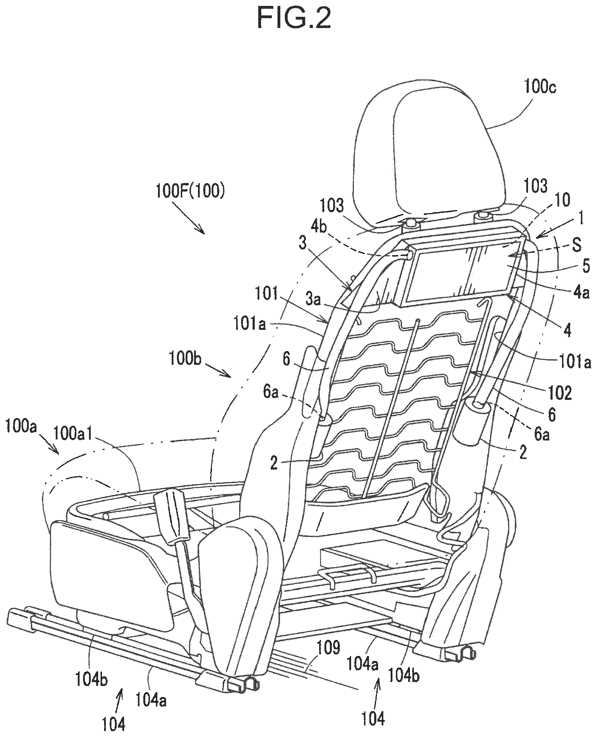

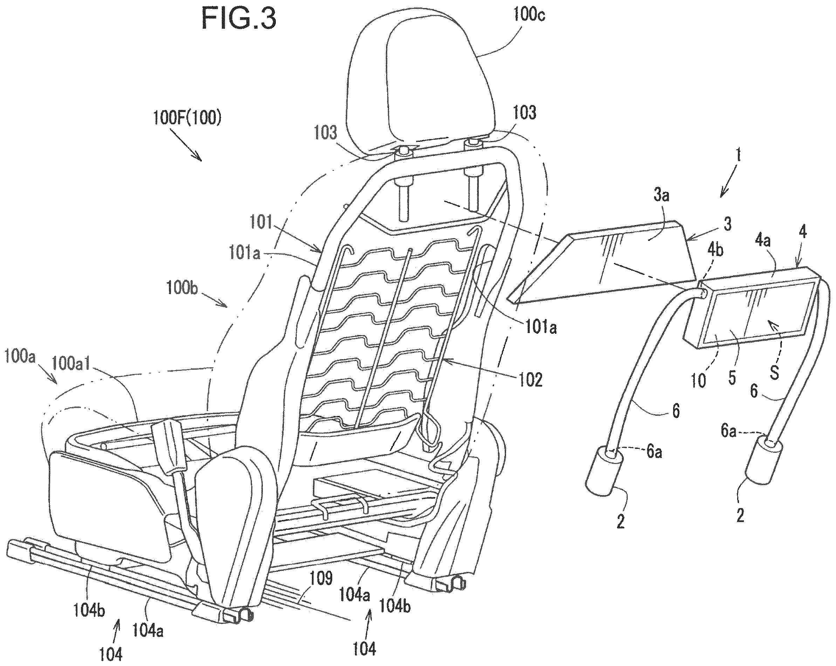

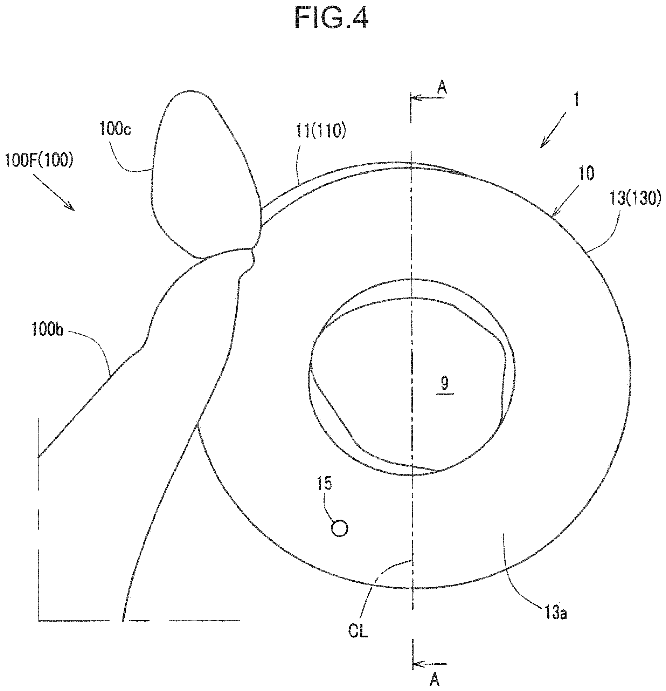

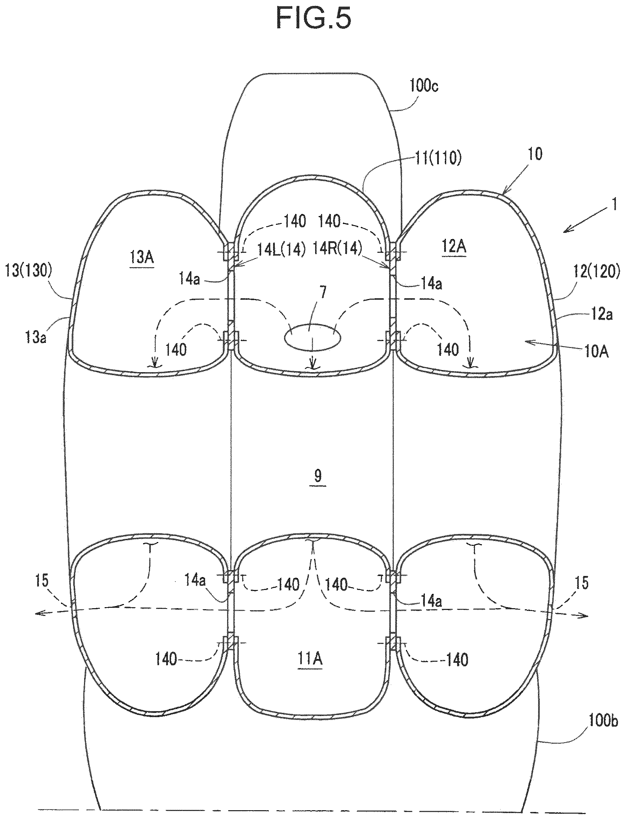

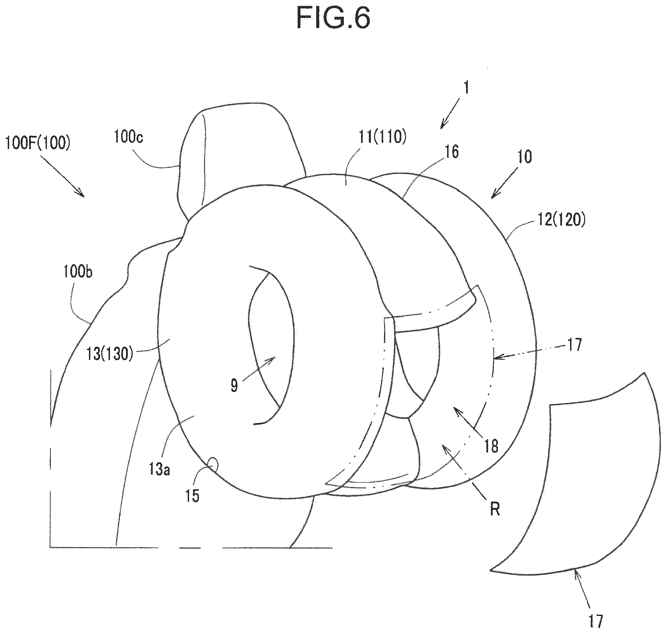

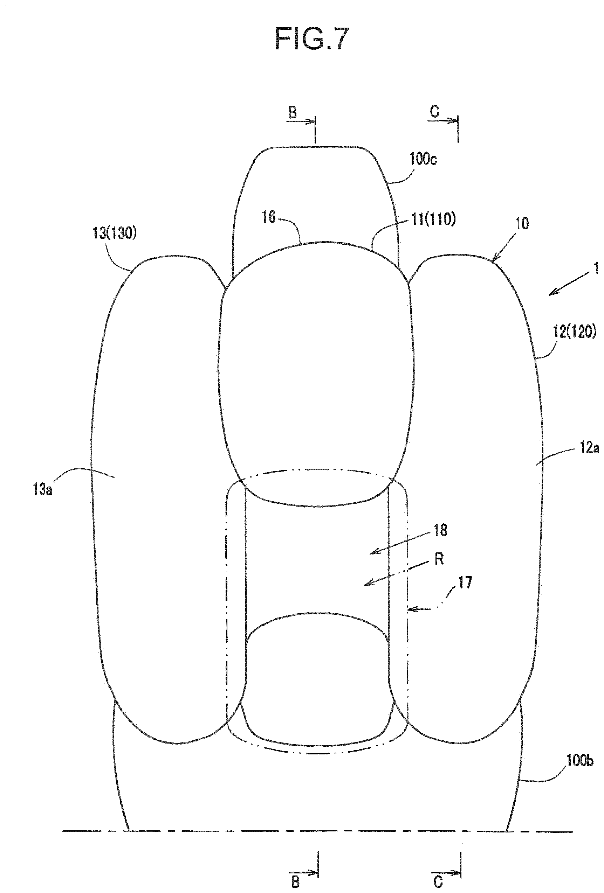

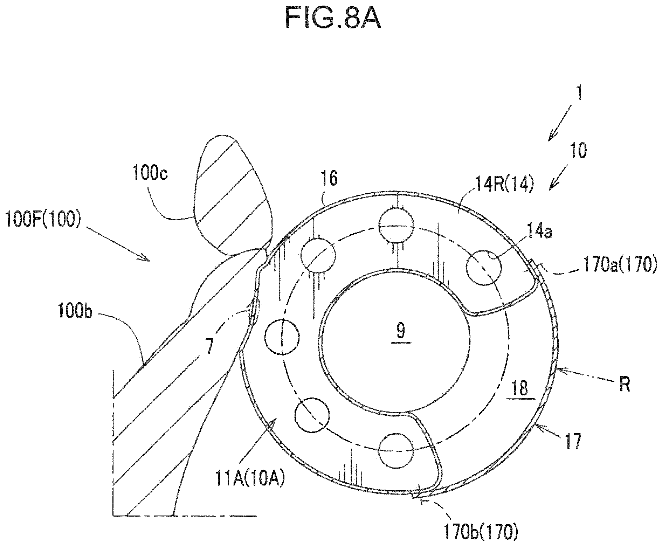

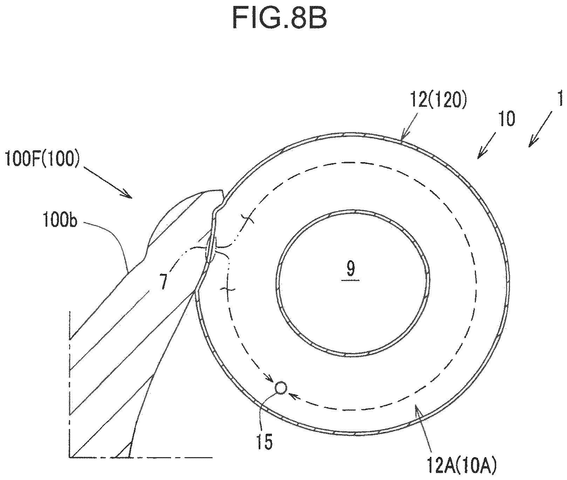

FIG. 1 is a perspective view illustrating a deployed state of an air bag device, which is mounted on an upper portion of a rear surface of a front seat. FIG. 2 is a perspective view of essential parts of an internal structure of the front seat on which the air bag device is mounted, when viewed from a rear side (a state that a cover and a cushion member are detached). FIG. 3 is an exploded perspective view of the air bag device illustrated in FIG. 2. FIG. 4 is a left side view illustrating a deployed state of the air bag device. FIG. 5 is a cross-sectional view taken along the line A-A in FIG. 4. FIG. 6 is a perspective view of the air bag device illustrating a state before a cavity covering cloth is attached. FIG. 7 is a rear view of the air bag device illustrating a state that the cavity covering cloth is detached. FIG. 8A is a cross-sectional view taken along the line B-B in FIG. 7. FIG. 8B is a cross-sectional view taken along the line C-C in FIG. 7.

However, in FIGS. 8A and 8B, for convenience of explanation, illustration of the internal structure of the front seat, and a reaction plate, a case, a cover and the like included in the air bag device is omitted. Further, in FIGS. 5, 8A, and 8B, a gas inlet port is illustrated in a simplified manner. Furthermore, in the following description, it is assumed that an up-down direction and a width direction (a right direction and a left direction) of an air bag device coincide with an up-down direction and a width direction (a right direction and a left direction) of a vehicle.

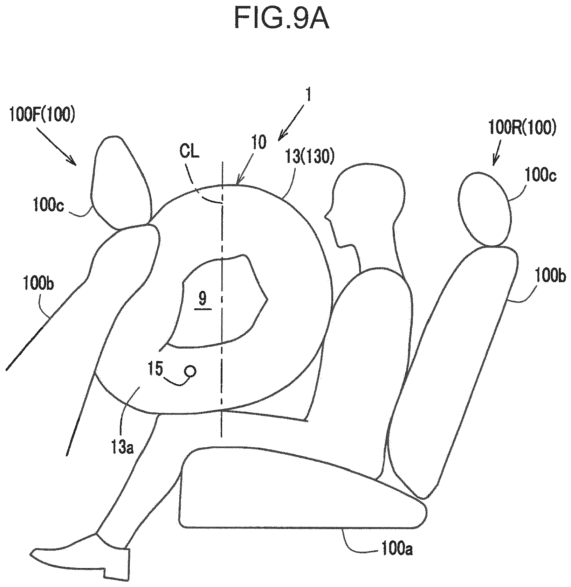

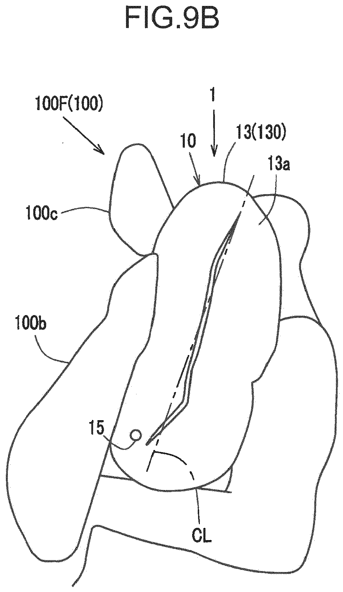

A vehicle to which an air bag device 1 according to the first embodiment is applied is provided with two rows of seats 100 including a front seat 100F and a rear seat 100R (see FIGS. 9A and 9B) arranged in a front-rear direction, and is configured such that relative positions of the front seat 100F and the rear seat 100R in the front-rear direction are changeable (see FIGS. 9A and 9B). As illustrated in FIG. 1, the air bag device 1 for a rear seat passenger is mounted on an upper portion of a rear surface of a seatback 100b of the front seat 100F and at an intermediate position in the width direction in such a way as to deploy rearwardly, when the vehicle collides, for protecting a passenger seated in the rear seat 100R.

As illustrated in FIGS. 2 and 3, each of the front seat 100F and the rear seat 100R (in FIGS. 2 and 3, only the front seat 100F is illustrated) includes a seat cushion 100a, the seatback 100b, and a headrest 100c. A seatback frame 101 for supporting the seatback 100b itself and a suspension mat 102 (a spring member) are provided within the seatback 100b. A pair of left and right headrest poles 103 and 103 for supporting the headrest 100c and mounted in such a way that an up-down position of the headrest 100c is adjustable are mounted on an upper portion of the seatback 100b.

The front seat 100F is constituted of a driver's seat and a passenger's seat arranged side by side in a vehicle width direction. As illustrated in FIG. 2 (in FIG. 2, only one of the seats is illustrated), the front seat 100F is installed on a passenger compartment floor 109 (floor panel) via a slide mechanism 104 for slidably supporting the seat cushion 100a in a seat front-rear direction.

The slide mechanism 104 is constituted of a pair of left and right guide rails 104a fixed to the passenger compartment floor 109 on left and right sides of the front seat 100F, and a slider 104b slidably engaged with the guide rails 104a. The slider 104b of the slide mechanism 104 is joined to a seat cushion frame 100a1 provided in the seat cushion 100a. Thus, a position of the front seat 100A is changeable relative to the rear seat 100R.

On the other hand, in the present embodiment, the rear seat 100R is directly installed on the passenger compartment floor 109 without via the slide mechanism 104 (not illustrated).

As illustrated in FIGS. 2 and 3, the air bag device 1 mainly includes an air bag 10 (see FIG. 1), an inflator 2 for supplying gas into the air bag 10 when a vehicle collides to deploy the air bag 10, a reaction plate 3 configured to support a jump-out reaction force when the air bag 10 is expanded, a case 4 for accommodating the folded air bag 10, and a cover 5 made of cloth and configured to cover the folded air bag 10 from a rear side.

The air bag 10 is accommodated and held in a state that the air bag 10 is folded in an accommodation space S surrounded by the case 4 and the cover 5. A perimeter of a gas inlet port 7 (see FIG. 5) formed in the air bag 10 is attached to a bottom surface portion (not illustrated) of the case 4 to be described later. The bottom surface portion of the case 4 is mounted in such a way that a surface thereof comes into contact with a rear surface 3a of the reaction plate 3.

The reaction plate 3 is made of a steel plate, and is mounted substantially in parallel to a rear surface of the seatback 100b on an upper rear portion of the seatback frame 101. The case 4 is constituted of an unillustrated bottom surface portion (front surface portion), and a peripheral wall portion 4a for surrounding the air bag 10 in a folded state, which is mounted on the rear surface 3a of the reaction plate 3.

The inflator 2 is provided by a pair in association with left and right sides of the seatback 100b. The inflators 2 are mounted on side frame portions 101a located on both sides of the seatback frame 101 from inner sided thereof (see FIG. 2). Each of these inflators 2 on both sides is connected to the air bag 10 via a gas supply tube 6 (a fabric tube).

Specifically, as illustrated in FIG. 2, the gas supply tube 6 includes a lower end connecting portion 6a to be connected to the inflator 2, and unillustrated upper end connecting portion to be connected to the gas inlet port 7 formed in the air bag 10. The gas supply tube 6 extends upwardly along the side frame portion 101a from the inflator 2 on both sides of the seatback 100b, is introduced to the accommodation space S from through-holes 4b (in FIGS. 2 and 3, only a left through-hole 4b is illustrated), which are formed in both lateral surfaces of the peripheral wall portion 4a of the case 4, and is connected to the air bag 10 in the accommodation space S.

The gas supply tube 6 is arranged on a rear side with respect to the suspension mat 102 within the seatback 100b in such a way that the suspension mat 102 holds the gas supply tube 6 from a front side so that the gas supply tube 6 does not push a front seat passenger by receiving an internal pressure of gas to be supplied when the inflator 2 is activated.

As illustrated in FIGS. 1 and 4, the air bag 10 is formed by sewing a plurality of sheets 110, 120 (see FIG. 1), and 130 in such a way that the air bag 10 is deployed rearwardly from a folded state into a doughnut shape (a substantially annular shape) having a through cavity portion 9 therein in a vehicle side view. A material of the sheets 110, 120, and 130 is a material such as synthetic resin, which is generally used for a sheet of an air bag, but is not specifically limited.

The air bag 10 has such a shape that three bag portions 11, 12, and 13 are concentrically aligned in the vehicle width direction. The air bag 10 is configured such that, when the air bag 10 is deployed, as illustrated in FIG. 7, the right bag portion 12 and the left bag portion 13 are formed bilaterally symmetrical to each other with respect to the middle bag portion 11.

The through cavity portion 9 is formed as a through-hole passing through a middle portion in the vehicle width direction in a side view of the air bag 10. Specifically, the air bag 10 (the sheets 110, 120, and 130) is formed into a laterally-oriented substantially tubular shape having an axis extending in the vehicle width direction.

The air bag 10 has a configuration such that the three bag portions 11, 12, and 13, namely, the middle bag portion 11 located at a middle portion of the air bag 10 in the vehicle width direction, and the outer bag portions 12 and 13 (the right bag portion 12 and the left bag portion 13) located on both sides of the middle bag portion 11 in the vehicle width direction, are aligned in the vehicle width direction. As illustrated in FIG. 5, the air bag 10 has an inner space 10A configured such that insides of the three bag portions 11, 12, and 13 communicate in the entirety in the vehicle width direction, when the air bag 10 is deployed.

As illustrated in FIG. 5, the air bag 10 includes, as the sheets 110, 120, and 130 for forming the air bag 10, the middle sheet 110, the right sheet 120, and the left sheet 130 respectively associated with the middle bag portion 11, the right bag portion 12, and the left bag portion 12. The air bag 10 is formed into a laterally-oriented substantially tubular shape configured such that a part between the adjacent bag portions (11 and 12) or (11 and 13) is formed into a joint shape by sewing opposing edges of the sheets 110, 120, and 130 in the vehicle width direction by a sewing portion 140.

The right bag portion 12 and the left bag portion 13 are respectively formed to have widths associated with a right shoulder part and a left shoulder part of a rear seat passenger (at least a width of each of a right shoulder part and a left shoulder part), when the air bag 10 is deployed. Further, as illustrated in FIG. 7, the right bag portion 12 and the left bag portion 13 are formed into a bilaterally symmetrical shape with respect to the middle bag portion 11, and each of which is formed into a doughnut shape (an annular shape) in a cross-sectional view orthogonal to the vehicle width direction (e.g. a cross-sectional view taken along the line C-C in FIG. 7) (see FIG. 8B. However, in FIG. 8B, only an orthogonal cross-section in the width direction of the right bag portion 12 is illustrated).

As illustrated in FIGS. 4 and 5, outer surface portions 12a and 13a (the right outer surface portion 12a and the left outer surface portion 13a) in the vehicle width direction are formed into an annular shape in a side view of the air bag 10 on the right bag portion 12 and the left bag portion 13. Vent holes 15 for discharging gas outwardly in the vehicle width direction are formed in the outer surface portions 12a and 13a in the vehicle width direction.

The vent holes 15 are formed in the outer surface portions 12a and 13a of the air bag 10 in a deployed state, at positions away from a rear seat passenger, specifically, positions on a lower side and on a slightly front side with respect to an intermediate position in the front-rear direction (see a centerline CL in FIG. 4).

As illustrated in FIGS. 6, 7, and 8A, the middle bag portion 11 has a width associated with the head part and the chest part of a rear seat passenger, and is constituted of a middle bag body portion 16 having a C-shape (a C-ring shape) in a cross-sectional view orthogonal to the vehicle width direction (a cross-sectional view taken along the line B-B in FIG. 7) in such a way as to open toward the rear seat passenger; and a cavity covering cloth 17.

The middle bag body portion 16 includes a cutout cavity portion 18, which is configured by forming a part (a chest associated area R), which particularly faces the chest part of a rear seat passenger into a cutout shape in a peripheral direction of the middle bag body portion 16. The middle bag body portion 16 has a C-shape in a vehicle side view, specifically, a C-ring shape in which a part of a ring is cut out by forming the cutout cavity portion 18. The cutout cavity portion 18 communicates between the through cavity portion 9 and a rear portion of the middle bag portion 11 in a substantially front-rear direction (a radial direction) (see FIGS. 6, 7, and 8A).

The cutout cavity portion 18 is formed to be recessed forwardly in such a way that the chest associated area R on an outer peripheral surface of the middle bag body portion 16 is away from a rear seat passenger. The cavity covering cloth 17 is attached to the chest associated area R in such a way as to cover the cutout cavity portion 18 from the side of a rear seat passenger.

As illustrated in FIGS. 1 and 8A, the cavity covering cloth 17 has a rectangular shape, and forms a part of an outer peripheral surface of the middle bag body portion 16. A material of the cavity covering cloth 17 is not limited to chemical fiber such as synthetic fiber. For example, plant fiber, animal fiber, or the like may be employed.

As illustrated in FIGS. 1 and 8A, an outer edge of the cavity covering cloth 17 is sewn by a sewing portion 170 along the entirety of a peripheral edge of the cutout cavity portion 18 in the sheets 110, 120, and 130 for forming the air bag 10.

Specifically, as illustrated in FIGS. 1 and 8A, an upper side edge of the cavity covering cloth 17, and an upper-side associated edge of the cutout cavity portion 18 of the middle sheet 110 are sewn by a sewing portion 170a along the vehicle width direction. Likewise, a lower side edge of the cavity covering cloth 17, and a lower-side associated edge of the cutout cavity portion 18 of the middle sheet 110 are sewn by a sewing portion 170b; a right side edge of the cavity covering cloth 17, and a right-side associated edge of the cutout cavity portion 18 of the right sheet 120 are sewn by a sewing portion 170c; and a left side edge of the cavity covering cloth 17, and a left-side associated edge of the cutout cavity portion 18 of the left sheet 130 are sewn by a sewing portion 170d, respectively.

As illustrated in FIGS. 5 and 8A, the gas inlet port 7 opened in the vehicle front-rear direction is formed in an upper front portion of the middle bag portion 11. In this example, the gas inlet port 7 is formed at a height position substantially the same as or a height position slightly higher than an upper end of the through cavity portion 9 of the middle bag portion 11 in a deployed state (see FIGS. 5 and 8A).

As illustrated in FIGS. 5 and 8A, partition walls 14 (a right partition wall 14R and a left partition wall 14L) for separating the inner space 10A for the bag portions 11, 12, and 13 is arranged between the bag portions 11, 12, and 13 adjacent to each other, specifically, between the middle bag portion 11 and the right bag portion 12, and between the middle bag portion 11 and the left bag portion 13 within the inner space 10A of the air bag 10.

The partition wall 14 is provided in the inner space 10A, as a shape holding means for holding the air bag 10 itself in an annular shape having the through cavity portion 9 therein against a gas pressure of the inner space 10A of the air bag 10, when the air bag 10 is expanded (deployed). As illustrated in FIG. 5, each of the partition walls 14 extends radially, and is continued to an outer peripheral portion and an inner peripheral portion of the air bag 10. Thus, it can be said that each of the partition walls 14 is a connecting member for connecting an outer peripheral portion and an inner peripheral portion of the air bag 10 within an inner space of the air bag 10.

By the partition walls 14 having the above configuration, the inner space 10A of the air bag 10 is separated into three divided spaces 11A, 12A, and 13A, which are separated for the bag portions 11, 12, and 13.

Communication holes 14a are formed in the partition walls 14 in such a way as to communicate with the divided spaces 11A, 12A, and 13A of the bag portions 11, 12, 13 adjacent to each other (see FIG. 5 and 8A). Thus, as described above, the inner space 10A of the air bag 10 communicates throughout the entirety of the width direction of the air bag 10, and propagation of filled gas is allowed in the entirety of the inner space 10A.

In this example, as illustrated in FIG. 8A, the partition wall 14 is formed into a sheet shape having a C-ring in a side view (a cross-sectional view taken along the line B-B in FIG. 7) in association with a part between the middle bag portion 11, and the outer bag portions 12 and 13 within the inner space 10A of the air bag 10. Six communication holes 14a are formed in such a way as to substantially equally divide the partition wall 14 of a C-ring shape circumferentially. Any one of the communication holes 14a has a perfect circular shape, whose center part is located on a circumference passing through an intermediate position of an outer peripheral edge and an inner peripheral edge of the partition wall 14 in a radial direction. As illustrated in FIG. 5, the communication holes 14a are formed in such a way as to pass through the partition walls 14 in a thickness direction thereof.

As illustrated in FIG. 5, an outer edge (an outer peripheral edge and an inner peripheral edge) of the partition wall 14R is interposed between opposing edges of the middle sheet 110 and the right sheet 120. In this state, the sewing portion 140 integrally sews the sheets 110 and 120, and the partition wall 14R along opposing edges thereof.

Likewise, an outer edge (an outer peripheral edge and an inner peripheral edge) of the partition wall 14L is interposed between opposing edges of the middle sheet 110 and the left sheet 130. In this state, the sewing portion 140 integrally sews the sheets 110 and 130, and the partition wall 14L along opposing edges thereof. Thus, the partition walls 14R and 14L are arranged perpendicular to the vehicle width direction within the inner space 10A in such a way as to be connected to each of an inner peripheral surface portion and an outer peripheral surface portion formed by the sheets 110, 120, and 130 of the air bag 10. By the partition walls 14R and 14L having this configuration, when the air bag is expanded, the shape of the air bag 10 is constrained (kept) in an annular shape having the through cavity portion 9 therein.

In this example, the partition wall 14 is made of a same material as the sheets 110, 120, and 130 for forming the bag portions 11, 12, and 13. However, the partition wall 14 may be made of another material. Further, a manner of sewing the sheets 110, 120, 130 for forming the bag portions 11, 12, and 13; and the partition wall 14 is not limited to the above-described sewing manner. As far as the inner space 10A is divided and partitioned for the bag portions 11, 12, and 13 by the partition wall 14, a sewing manner is not specifically limited.

Subsequently, an operation of the air bag device 1 when the vehicle receives an impact is described. The inflators 2 generate gas when an impact of the vehicle is detected, and supply the gas into the air bag 10 through the gas inlet port 7 via the gas supply tubes 6. By the supplied gas, the air bag 10 is expanded from a folded shape and deployed rearwardly, while pushing and opening the cover 5 (see FIG. 2) made of cloth.

Since the gas inlet port 7 is formed in the middle bag portion 11, high-pressure gas supplied into the air bag 10 through the gas inlet port 7 spreads through the divided space 11A of the middle bag portion 11, and is also supplied to the divided spaces 12A and 13A of the outer bag portions 12 and 13 located on both sides of the middle bag portion 11 from the middle bag through the communication holes 14a of the partition walls 14R and 14L. Then, the high-pressure gas spreads through the entirety of the divided spaces 12A and 13A of the outer bag portions 12 and 13, which are formed into an annular shape in a side view, and escapes through the vent holes 15 formed in the outer surface portions 12a and 13a of the outer bag portions 12 and 13 (see the broken-line arrows in FIGS. 5 and 8B).

In this way, the air bag 10 is deployed rearwardly by high-pressure gas, and is deployed outwardly from the middle bag portion 11 to the outer bag portions 12 and 13 in this order.

Then, the middle bag portion 11 is able to receive the head part and the chest part of the rear seat passenger, and the outer bag portions 12 and 13 are able to receive the shoulder parts of the rear seat passenger.

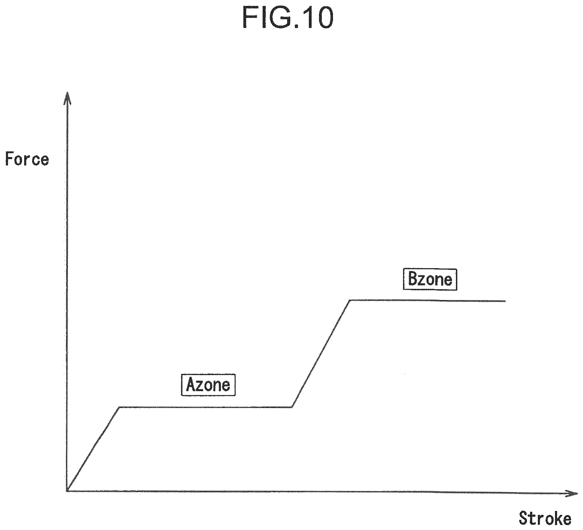

FIGS. 9A and 9B illustrate operation explanatory diagrams of the air bag device 1 according to the present embodiment, in a case where the front seat 100F is in an ordinary position with respect to a rear seat passenger, and a case where the front seat 100F is in a proximate position, respectively. FIG. 10 illustrates a characteristic diagram of the air bag device 1 according to the present embodiment illustrating a relationship between load exerted to a rear seat passenger when the air bag 10 contacts against the rear seat passenger, and displacement of the air bag in the case of FIG. 9A.

As illustrated in FIG. 9A, in a case where the air bag 10 is deployed rearwardly when the front seat 100F is in an ordinary position where a distance to the rear seat passenger in the front-rear direction is sufficiently secured, the air bag 10 is able to receive the rear seat passenger, while absorbing an impact received by the rear seat passenger in accordance with a characteristic illustrated in the graph of FIG. 10. Specifically, in an initial stage of contact of the air bag 10 against the rear seat passenger, the air bag 10 is able to receive the rear seat passenger, while absorbing an impact received by the rear seat passenger in a two-step compression range constituted of a first compression range (see the A zone in FIG. 10) where the air bag 10 is compressed by collapse of the through cavity portion 9, and a second compression range (see the B zone in FIG. 10) where the air bag 10 itself is compressed by collapse of the inner space 10A after the through cavity portion 9 completely collapses (specifically, after the air bag 10 is brought to a shape as illustrated in FIG. 9B).

On the other hand, in a case where the air bag 10 is deployed rearwardly, when the front seat 100F is in a proximate position where a distance to the rear seat passenger in the front-rear direction is short, as compared with the ordinary position, although a time (stroke) associated with the first compression range (see the A zone in FIG. 10) is shortened, also in this case, it is possible to receive the rear seat passenger, while absorbing an impact received by the rear seat passenger in the two-stage compression range as illustrated in the graph of FIG. 10.

For example, in a case where a vehicle collision occurs when the front seat 100F is extremely proximate to the rear seat passenger, the rear seat passenger contacts against the air bag 10 which is deployed rearwardly before the rear seat passenger bumps forward by inertia force when the collision occurs, or substantially concurrently with the collision. In this case, as illustrated in FIG. 9B, the through cavity portion 9 instantaneously collapses, whereby it is possible to reduce a risk concerning the passenger by the air bag 10 without a likelihood that the rear seat passenger is excessively pressed by the air bag 10, which is expanded by high-pressure gas. Thus, the air bag 10 is able to securely receive and protect the rear seat passenger.

Specifically, the air bag 10 according to the present embodiment is able to secure protection performance of a rear seat passenger, no matter how short or long a distance between the front seat 100F and the rear seat passenger in the front-rear direction is.

Further, as illustrated in FIGS. 6, 7, and 8A, the middle bag portion 11 includes the cutout cavity portion 18, and the cavity covering cloth 17 for covering the cutout cavity portion 18 from the side of a rear seat passenger is provided. Therefore, when the air bag 10 is deployed, the chest part of the rear seat passenger contacts with the cavity covering cloth 17 of the middle bag portion 11. This avoids direct contact of the air bag 10 (the middle bag body portion 16), which is expanded by high-pressure gas, against the chest part of the rear seat passenger.

The air bag device 1 according to the present embodiment is an air bag device for a vehicle provided with at least two rows of seats 100 including the front seat 100F and the rear seat 100R arranged in the front-rear direction, and configured such that relative positions of the front seat 100F and the rear seat 100R in the front-rear direction are changeable, wherein the air bag device 1 is mounted on a rear surface of the seatback 100b of at least the front seat 100F. The air bag device 1 includes the air bag 10 which is deployed rearwardly into an annular shape having the through cavity portion 9 as a cavity portion therein in a vehicle side view. The air bag 10 includes the partition wall 14 as a shape holding means for holding the air bag 10 itself in an annular shape having the through cavity portion 9 therein against a gas pressure of the inner space 10A of the air bag 10 (see FIGS. 5 and 8A).

In the above configuration, it is easy to keep the through cavity portion 9 inside the air bag 10, which is deployed in such a way as to have the through cavity portion 9 therein in a vehicle side view.

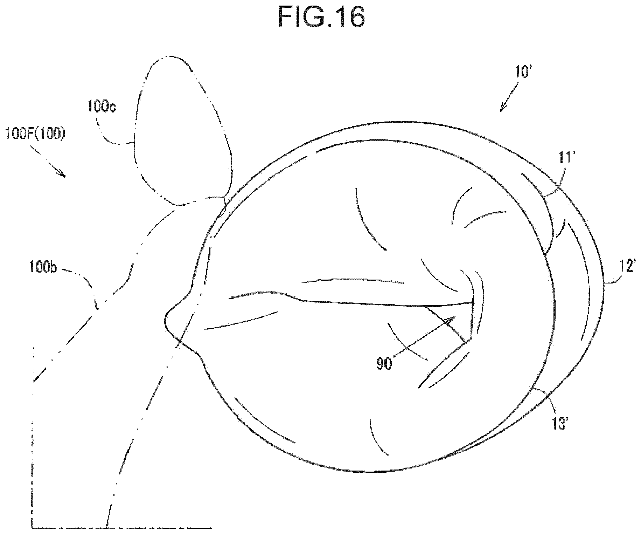

More specifically, in a case of a conventional air bag 10' having a through cavity portion 90 therein, but without a shape holding means such as the partition wall 14, as illustrated in FIG. 16, when the air bag 10' is deployed by supply of gas into the air bag 10' , the air bag 10' is expanded also toward the through cavity portion 90 formed inside the air bag 10' by a gas pressure of the air bag 10' itself, without expanding annularly in a side view, thereby collapsing the through cavity portion 90.

FIG. 16 is an external view of a deployed state of a conventional air bag without a shape holding means. Further, similarly to the air bag 10 according to the present embodiment, the conventional air bag 10' illustrated in FIG. 16 includes a C-ring shaped middle bag portion 11', and outer bag portions 12' and 13' (the right bag portion 12' and the left bag portion 13') located on both sides of the middle bag portion 11' in the vehicle width direction. However, in FIG. 16, illustration of a cavity covering cloth 17 is omitted in order to clarify the shape of the air bag when being deployed.

In this way, when the through cavity portion 90 collapses by a gas pressure when the air bag 10' is deployed, an advantageous effect by formation of the through cavity portion 90 may not be expected, when a rear seat passenger contacts against the air bag 10'. Specifically, the conventional air bag may not provide the above-described advantageous effect that it is possible to reduce a risk concerning a rear seat passenger by the air bag 10' by receiving the rear seat passenger, while absorbing an impact received by the rear seat passenger by the two-step compression range as illustrated in the graph of FIG. 10.

On the other hand, in the present embodiment, it is possible to keep the shape of the air bag 10 to a desired shape such that the through cavity portion 9 does not collapse against a gas pressure of the inner space 10A by the partition wall 14, when the air bag 10 is deployed. Therefore, it is easy to keep the through cavity portion 9.

Thus, it is possible to securely bring the air bag 10 having the through cavity portion 9 therein into contact with the rear seat passenger, when the air bag 10 is deployed rearwardly. Therefore, in the air bag device 1, it is possible to reduce a risk concerning a rear seat passenger by the air bag 100 by receiving the rear seat passenger, based on compression characteristics having the two-step compression range (see the A zone and the B zone) illustrated in FIG. 10.

Further, in the air bag device 1, as the shape holding means, employed is the partition wall 14 for separating the inner space 10A in the vehicle width direction at a predetermined position in the vehicle width direction, while allowing propagation of gas filled in the inner space 10A of the air bag 10 (see FIG. 5).

In this configuration, it is possible to keep the shape of the air bag 10, while allowing propagation of gas filled in the inner space 10A of the air bag 10 among the bag portions 11, 12, and 13 adjacent to one another by interposing the partition walls 14 having the communication holes 14a (see FIGS. 5 and 8A).

Therefore, in the air bag device 1, for example, it is not necessary to arrange and fix a plurality of annular-shaped bag portions to one another in the vehicle width direction, and fix the bag portions in such a way that communication holes formed in the adjacent bag portions coincide with each other in a circumferential direction, like a configuration in which communication holes are formed in opposing portions of bag portions adjacent to each other in the vehicle width direction. Therefore, it is easy to configure an air bag provided with a shape holding means.

Further, the partition wall 14 of the present embodiment is disposed in such a way as to separate the inner space 10A in the vehicle width direction, specifically, in such a way as to have a surface intersecting with the vehicle width direction. Since the air bag device 1 employs a configuration in which a deployed shape of the air bag 10 (the sheets 110, 120, and 130) is held by the partition wall 14, for example, it is possible to securely hold the shape of the air bag 10 in such a way that the through cavity portion 9 does not collapse, as compared with a string-shaped tether, which is stretched in such a way as to connect an inner peripheral surface and an outer peripheral surface of an annular-shaped air bag.

Further, in the air bag device 1, the partition wall 14 is formed at a position corresponding to a part between the bag portions 11, 12, and 13 adjacent to each other within the inner space 10A (see FIG. 5).

In the above configuration, by disposing the partition wall 14 at a position corresponding to a part between the bag portions 11, 12, and 13 adjacent to each other, it is possible to reinforce a joint portion between the bag portions 11, 12, and 13 adjacent to each other, without impairing a deployed shape of the bag portions 11, 12, and 13 themselves by the partition wall 14.

Further, in the present embodiment, the right partition wall 14R is formed on a part between the middle bag portion 11 and the right bag portion 12, and the left partition wall 14L is formed on a part between the middle bag portion 11 and the left bag portion 13 within the inner space 10A. Therefore, it is possible to efficiently and in a well-balanced manner keep the shape of the air bag 10 in the entirety in the width direction of the air bag 10 in such a way that the through cavity portion 9 does not collapse by the paired right and left partition walls 14R and 14L, namely, by a smallest number of partition walls, which are located on both sides of the middle bag portion 11 in the vehicle width direction.

In the following, air bag devices 20 and 30 as other embodiments are described. However, same constituent elements as those of the air bag device 1 according to the first embodiment are indicated with same reference numbers, and description thereof is omitted.

### (Second Embodiment (not covered by claim 1)

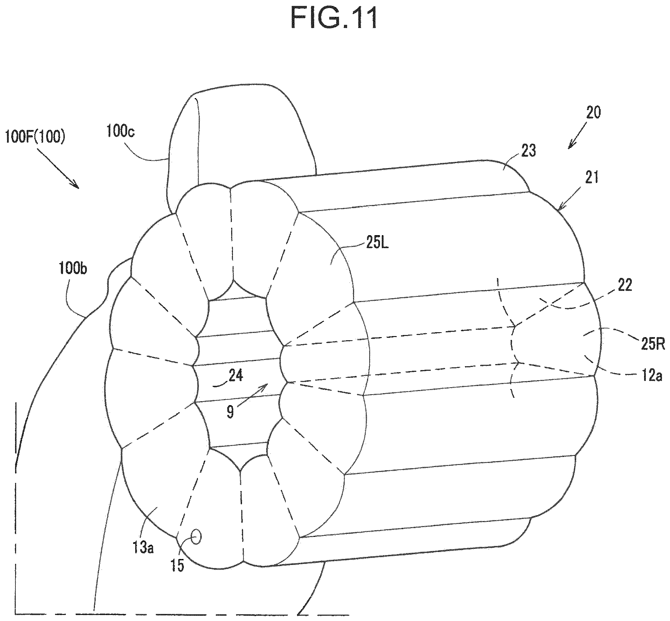

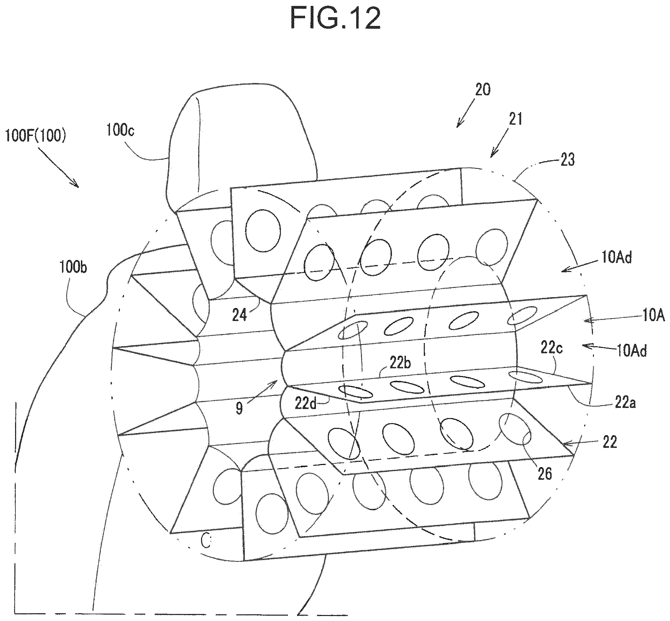

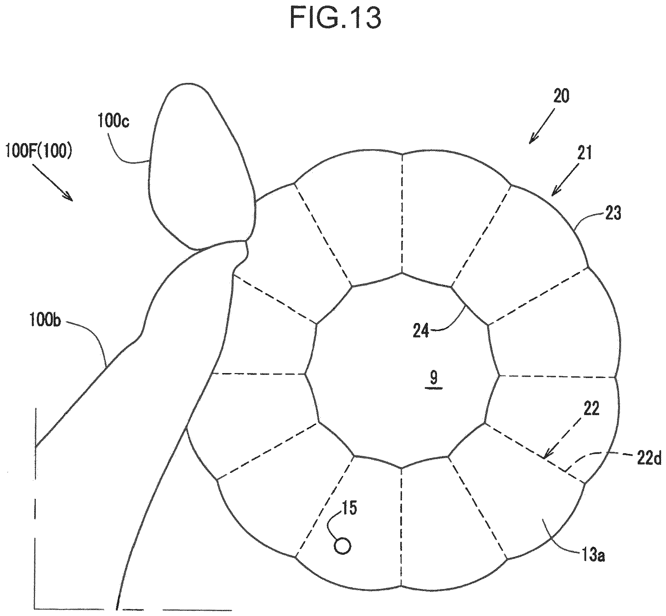

FIG. 11 to 13 illustrate the air bag device 20 according to the second embodiment, not covered by claim 1, in which tethers 22 as a shape holding means is provided within an inner space 10A. FIG. 11 is a perspective view of the air bag device 20 according to the second embodiment, which is mounted on an upper portion of a rear surface of a front seat 100F. FIG. 12 is an explanatory diagram of an internal configuration of an air bag 21, which is illustrated in a simplified way by omitting a part of a sheet for forming an outer surface of the air bag 21 in FIG. 11. FIG. 13 is a left side view of the air bag device according to the second embodiment.

The air bag 21 in the second embodiment includes a sheet outer peripheral portion 23 constituting an outer periphery of the air bag 21, a sheet inner peripheral portion 24 constituting an inner periphery of the air bag 21, and a pair of left and right sheet surface portions 25 (the sheet light surface portion 25R and the sheet left surface portion 25L), which respectively form outer surfaces (a right outer surface portion 12a and a left outer surface portion 13a) of the air bag 21 in a vehicle width direction. The air bag 21 is formed int a substantially tubular shape having an axis in the vehicle width direction. The inner space 10A of the air bag 21 is defined by the sheet inner peripheral portion 24, the sheet outer peripheral portion 23, and the paired left and right sheet surface portions 25L and 25R, specifically, is separated from the outside.

In the inner space 10A of the air bag 21, the tethers 22 for keeping a distance (a radial distance) between the sheet outer peripheral portion 23 and the sheet inner peripheral portion 24 are arranged as a shape holding means.

The tether 22 is a planar tether extending in the radial direction and in the vehicle width direction within the inner space 10A. A plurality of tethers 22 are disposed at a predetermined interval circumferentially in such a way as to divide the inner space 10A circumferentially. In this example, twelve tethers 22 are provided in such a way as to divide the inner space 10A substantially equally into twelve parts circumferentially. The twelve tethers 22 are disposed radially in a side view of the air bag 21 in such a way that each of the tethers 22 has a surface orthogonal to a circumferential direction of the inner space 10A.

The tether 22 is formed of a band-shaped (strip-shaped) sheet having long sides (22a and 22b) extending in the entire length of the inner space 10A in the vehicle width direction, and short sides (22c, and 22d) extending in the entire length of the inner space 10A in the radial direction (see FIG. 12). Specifically, the tether 22 is disposed within the inner space 10A in such a way as to connect the sheet inner peripheral portion 24 and the sheet outer peripheral portion 23, which will be described later. The tether 22 has a short length (a radial length) by which the tether 22 is stretched radially within the inner space 10A in such a way that a through cavity portion 9 does not collapse, when the air bag 21 is deployed. Therefore, it can be said that the tether 22 is a connecting member for connecting the sheet inner peripheral portion 24 and the sheet outer peripheral portion 23 within an inner space of the air bag 21.

Further, at least one communication hole 26 for communicating between one of divided spaces lOAd divided by the tether 22 and the other of the divided spaces lOAd within the inner space 10A is formed to pass through the tether 22 on a surface orthogonal to the circumferential direction of the inner space 10A (see FIG. 12).

In this example, four communication holes 26 each having a perfect circular shape pass through the tether 22 in a thickness direction thereof, for each of the tethers 22. These four communication holes 26 are formed substantially equi-distantly in the vehicle width direction of the tether 22.

Further, a radial outer edge 22, a radial inner edge 22b, a right edge 22c, and a left edge 22d of the tether 22 are integrally mounted, by sewing, to portions respectively facing the sheet outer peripheral portion 23, the sheet inner peripheral portion 24, the right sheet surface portion 25, and the left sheet surface portion 25, which form the air bag 21.

Thus, each of the tethers 22 is arranged in a stretched state without loosening within the inner space 10A, when the air bag 21 is deployed, and a distance between the sheet outer peripheral portion 23 and the sheet inner peripheral portion 24 is kept to a predetermined distance, specifically, to such a distance that the through cavity portion 9 of a substantially tubular shape does not collapse, when the air bag 21 is deployed.

The air bag device 20 according to the present embodiment is configured such that the air bag 21 includes the sheet outer peripheral portion 23 which constitutes an outer periphery of the air bag 21, and the sheet inner peripheral portion 24 which defines the inner space 10A in cooperation with the sheet outer peripheral portion 23, and constitutes an inner periphery of the air bag 21; and the tethers 22 for keeping a distance between the sheet outer peripheral portion 23 and the sheet inner peripheral portion 24 within the inner space 10A are employed, as a shape holding means (see FIGS. 11 to 13).

In this configuration, when the air bag 21 is deployed, it is possible to keep a distance between the sheet outer peripheral portion 23 and the sheet inner peripheral portion 24 to a predetermined distance by the tethers 22 within the inner space 10A. Thus, it is possible to securely form the through cavity portion 9 inside the air bag 21, when the air bag 21 is deployed.

In the air bag device 20, the tether 22 is disposed to intersect with (in this example, orthogonal to) a circumferential direction in such a way as to divide the inner space 10A circumferentially. The tether 22 is a planar tether extending in the vehicle width direction within the inner space 10A. The communication holes 26 for communicating between one of the divided spaces lOAd divided by the tether 22 and the other of the divided spaces lOAd are formed in the tether 22 (see FIG. 12).

In this configuration, since it is possible to connect the sheet outer peripheral portion 23 and the sheet inner peripheral portion 24 along the vehicle width direction by the tethers 22 within the inner space 10A, it is possible to securely keep a distance between the sheet outer peripheral portion 23 and the sheet inner peripheral portion 24 to such a distance that the through cavity portion 9 does not collapse inside the air bag 21.

Further, since the communication holes 26 are formed in the tether 22, it is possible to suppress that propagation of gas within the inner space 10A is impaired by the tether 22, and it is possible to smoothly fill the entirety of the inner space 10A with gas.

### (Third Embodiment)

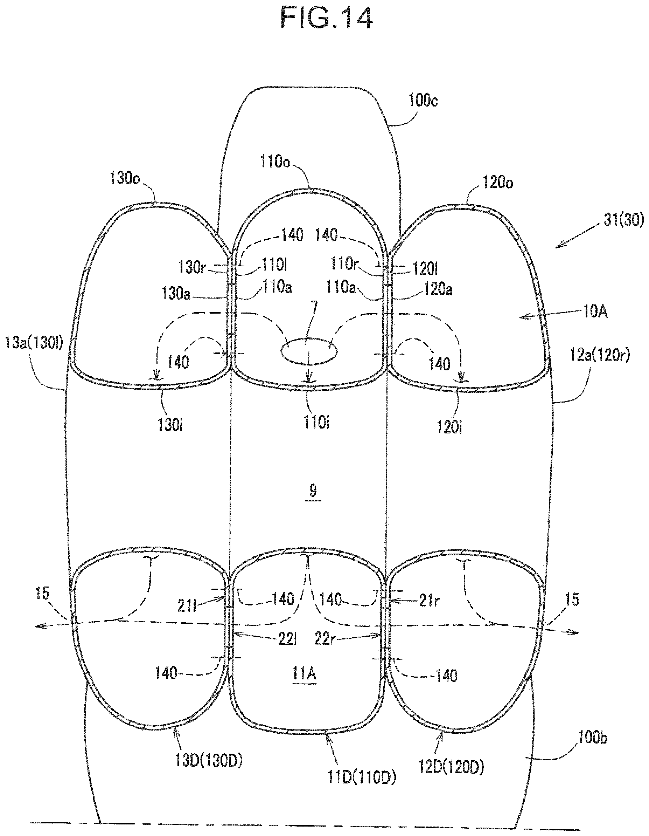

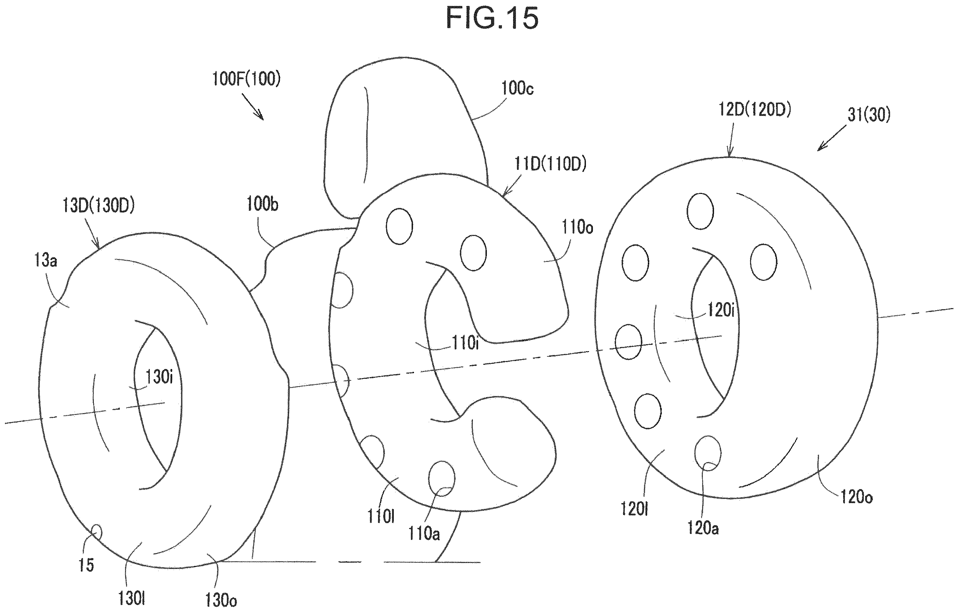

FIGS. 14 and 15 illustrate the air bag device 30 according to the third embodiment provided with an air bag 31, which is configured in such a way that shape holding performance as a whole is secured by joining a plurality of independent bag portions 11D, 12D, and 13D (bag cells) one another. FIG. 14 is a cross-sectional view of the air bag device 30 according to the third embodiment (a cross-sectional view associated with the A-A section in FIG. 4). FIG. 15 is an exploded perspective view of the air bag device 30 (a state that the air bag 31 is disassembled into the bag portions 11D, 12D, and 13D).

Similarly to the first embodiment, the air bag 31 in the third embodiment has an external appearance in which the middle bag portion 11D, and the outer bag portions 12D and 13D (the right bag portion 12D and the left bag portion 13D) located on left and right sides of the middle bag portion 11D are aligned in a vehicle width direction (see FIG. 14).

As illustrated in FIGS. 14 and 15, the middle bag portion 11D is formed of a middle sheet 110D, which forms the middle bag portion 11D. The middle bag portion 11D includes a middle sheet outer peripheral surface portion 1100, a middle sheet inner peripheral surface portion 110i, a middle sheet right surface portion 110r (see FIG. 14), and a middle sheet left surface portion 1101. The middle bag portion 11D is formed into a bag shape having a C-ring shape in a side view in such a way as to be independent of the outer bag portions 12D and 13D adjacent to the middle bag portion 11D by these surface portions 110o, 110i, 110r, and 110l (see FIG. 15).

Further, as illustrated in FIGS. 14 and 15, the right bag portion 12D is formed of a right sheet 120D, which forms the right bag portion 12D. The right bag portion 12D includes a right sheet outer peripheral surface portion 120o, a right sheet inner peripheral surface portion 120i, a right sheet right surface portion 120r (see FIG. 14), and a right sheet left surface portion 1201. The right bag portion 12D is formed into a bag shape having an annular shape in a side view in such a way as to be independent of the middle bag portion 11D adjacent to the right bag portion 12D by these surface portions 120o, 120i, 120r, and 1201. Note that the right outer surface portion 12a is formed by the right sheet right surface portion 120r, and a vent hole 15 is formed in the right sheet right surface portion 120r.

Likewise, as illustrated in FIGS. 14 and 15, the left bag portion 13D is formed of a left sheet 130D, which forms the left bag portion 13D. The left bag portion 13D includes a left sheet outer peripheral surface portion 130o, a left sheet inner peripheral surface portion 130i, a left sheet right surface portion 130r (see FIG. 14), and a left sheet left surface portion 1301. The left bag portion 13D is formed into a bag shape having an annular shape in a side view in such a way as to be independent of the middle bag portion 11D adjacent to the left bag portion 12D by these surface portions 130o, 130i, 130r, and 1301. Note that the left outer surface portion 13a is formed by the left sheet left surface portion 1301, and a vent hole 15 is formed in the left sheet left surface portion 1301.

Further, as illustrated in FIGS. 14 and 15, at least one through-hole 110a (in this example, six through-holes 110a) passing in the vehicle width direction (sheet thickness direction) is formed at substantially equal distance in the circumferential direction in each of the middle sheet right surface portion 110r and the middle sheet left surface portion 110l of the middle bag portion 11D.

On the other hand, as illustrated in FIGS. 14 and 15, at least one through-hole 120a (in this example, six through-holes 120a) passing in the vehicle width direction is formed in the right sheet left surface portion 1201 of the right bag portion 12D circumferentially at a position associated with the through-hole 110a in a side view. Further, at least one through-hole 130a (in this example, six through-holes 130a) passing in the vehicle width direction is formed in the left sheet right surface portion 130r of the left bag portion 13D circumferentially at a position associated with the through-hole 110a in a side view.

Further, as illustrated in FIG. 14, the middle bag portion 11D and the right bag portion 12D are arranged adjacent to each other in the vehicle width direction. The middle sheet right surface portion 110r and the right sheet left surface portion 1201 are sewn together by a sewing portion 140 on the adjacent portion.

Thus, the middle sheet right surface portion 110r and the right sheet left surface portion 1201 are joined in such a way as to overlap each other. A right sheet joint wall 21r which separates an inner space 10A in the vehicle width direction is formed by the middle sheet right surface portion 110r and the right sheet left surface portion 1201 on a boundary portion (adjacent portion) between the middle bag portion 11D and the right bag portion 12D (see FIG. 14).

At this occasion, the through-hole 110a of the middle sheet right surface portion 110r and the through-hole 120a of the right sheet left surface portion 1201 coincide with each other circumferentially. A communication hole 22r for communicating with the inner space 10A in the vehicle width direction is formed in the right sheet joint wall 21r by the through holes 110a and 120a (see FIG. 14).

Likewise, as illustrated in FIG. 14, the middle bag portion 11D and the left bag portion 13D are arranged adjacent to each other in the vehicle width direction. The middle sheet left surface portion 1101 and the left sheet right surface portion 130r are sewn together by the sewing portion 140 on the adjacent portion.

Thus, the middle sheet left surface portion 1101 and the left sheet right surface portion 130r are joined in such a way as to overlap each other. A left sheet joint wall 211 which separates the inner space 10A in the vehicle width direction is formed by the middle sheet left surface portion 1101 and the left sheet right surface portion 130r on a boundary portion (adjacent portion) between the middle bag portion 11D and the left bag portion 13D.

At this occasion, the through-hole 110a of the middle sheet left surface portion 1101 and the through-hole 130a of the left sheet right surface portion coincide with each other circumferentially. A communication hole 221 for communicating with the inner space 10A in the vehicle width direction is formed in the left sheet joint wall 211 by the through holes 110a and 130a.

As described above, the sheet joint walls 21r and 211 perpendicular to the vehicle width direction are formed on right and left sides of the inner space 10A. Since the communication holes 22r and 221 are formed in the right and left sheet joint walls 21r and 211, respectively, the inner space 10A is brought to a communicated state in such a way that propagation of gas is allowed in the entirety of the inner space 10A in the vehicle width direction (see FIG. 14).

The air bag 31 provided in the air bag device 30 according to the third embodiment is constituted of the annular-shaped bag portions 11D, 12D, and 13D which are arranged and fixed to one another in the vehicle width direction, and configured to allow propagation of gas inside the air bag 31.

In the above configuration, similarly to the air bags 10, 20, and 30 provided with the partition walls 14 and the tethers 22, it is possible to hold the air bag in a shape such that a through cavity portion 9 does not collapse, without a shape holding means such as the partition wall 14s or the tethers 22.

The present invention is not limited to the configurations of the above embodiments, and various modified embodiments are applicable.

For example, in the first embodiment, the cutout cavity portion 18, and the cavity covering cloth 17 for covering the cutout cavity portion 18 are formed in the chest associated area R on an outer peripheral surface of the air bag 10. In the present invention, however, the cutout cavity portion 18 and the cavity covering cloth 17 are not essential elements. Specifically, as far as a shape holding means for keeping the air bag in an annular shape having the through cavity portion 9 is provided, the present invention is not limited to a configuration in which the middle bag portion 11 (middle bag body portion 16) has a C-ring shape in a side view. The middle bag portion may have an annular shape in a side view, similarly to the outer bag portions 12 and 13 (the right bag portion 12 and the left bag portion 13).

A means for joining the partition wall 14 or the tether 22 to the air bag 10, and as a means for forming the sheet joint walls 21r and 211 on right and left sides of the air bag by joining opposing portions between the middle bag portion 11D, and the outer bag portions 12D and 13D are not limited to sewing as described above. Bonding, welding, or the like may be employed.

Further, as far as the air bag according to the present invention includes one middle bag portion 11 (11D), and outer bag portions 12 (12) and 13 (13D) arranged on left and right sides of the middle bag portion 11 (11D) each by the same number, the number of air bag portions is not limited to three. The air bag may include bag portions of an odd number of five or more.

Further, it is needless to say that the air bag device according to the present invention is not limited to a configuration in which the air bag device is mounted on a rear surface of the seatback 100b of each of the front seats 100F, namely, a driver's seat and a passenger's seat. An air bag device may be mounted on a rear surface of a seatback 100b of a front seat 100F, which is one of a pair of left and right seats. Further, in a vehicle having three or more rows of seats in a front-rear direction, the present invention is not limited to a configuration in which an air bag device is mounted on a rear surface of a seatback 100b of a frontmost seat, and an air bag device may be mounted on a rear surface of a seatback 100b of a seat located on a front side with respect to a rearmost seat.

Furthermore, in the present embodiment, the front seat 100F is displaceable with respect to the rear seat 100R. The present embodiment, however, is not limited to this configuration. The front seat 100F and the rear seat 10R may be configured to be displaceable relative to each other in a front-rear direction by configuring at least one of the front seat 100F and the rear seat 100R to be slidably displaceable in the front-rear direction.

The following is an overview of the present invention described above.

The present invention is directed to an air bag device for a vehicle provided with at least two rows of seats including a front seat and a rear seat arranged in a front-rear direction, and configured such that relative positions of the front seat and the rear seat in the front-rear direction are changeable. The air bag device is mounted on a rear surface of a seatback of at least the front seat. The air bag device includes an air bag which is deployed rearwardly into a shape having a cavity portion therein in a vehicle side view by gas to be supplied from an inflator. The air bag includes shape holding means for holding the air bag itself in a shape having the cavity portion therein against a gas pressure of an inner space of the air bag, when being deployed.

In this configuration, it is easy to keep the cavity portion inside the air bag, which is deployed in such a way as to have the cavity portion therein in the vehicle side view.

As an aspect of the present invention, the air bag includes a sheet outer peripheral portion which constitutes an outer periphery of the air bag, and a sheet inner peripheral portion which defines the inner space in cooperation with the sheet outer peripheral portion, and constitutes an inner periphery of the air bag. The shape holding means is a connecting member for connecting the sheet outer peripheral portion and the sheet inner peripheral portion within the inner space of the air bag.

In this configuration, spanning the connecting member between the sheet outer peripheral portion and the sheet inner peripheral portion enables to keep a distance between the sheet outer peripheral portion and the sheet inner peripheral portion. Therefore, it is possible to prevent that the shape of the air bag collapses by a gas pressure, and it is possible to satisfactorily keep the shape of the air bag having the cavity portion therein.

As an aspect of the present invention, the connecting member is a partition wall for separating the inner space in a vehicle width direction at a predetermined position in the vehicle width direction, while allowing propagation of gas filled in the inner space of the air bag.

In this configuration, since it is not necessary to adjust an angle between bag portions in such a way as to fix the adjacent bag portions to each other, it is possible to form the connecting member with a relatively simplified configuration.

Further, as an aspect of the present invention, the connecting member is a plurality of tethers arranged radially, and configured to connect the sheet inner peripheral portion and the sheet outer peripheral portion within the inner space, while allowing propagation of gas filled in the inner space of the air bag.

In this configuration, it is possible to keep a distance between the sheet outer peripheral portion and the sheet inner peripheral portion to a desired distance by the tethers within the inner space, when the air bag is deployed. Thus, it is possible to securely configure the cavity portion inside the air bag.

Further, as an aspect of the present invention, the tethers are disposed to intersect with a circumferential direction in such a way as to divide the inner space circumferentially. Each of the tethers is a planar tether extending in the vehicle width direction within the inner space. A communication hole for communicating between one of divided spaces divided by the tether and the other of the divided space is formed in the tether.

In this configuration, since it is possible to connect the sheet outer peripheral portion and the sheet inner peripheral portion along the vehicle width direction by the planar tethers within the inner space, it is possible to securely keep a distance between the sheet outer peripheral portion and the sheet inner peripheral portion to such a distance that the cavity portion inside the air bag does not collapse.

Further, since the communication hole is formed in the tether, it is possible to suppress that propagation of gas within the inner space is impaired by the tether, and it is possible to smoothly fill the entirety of the inner space with gas.

Further, another aspect of the present invention is directed to an air bag device for a vehicle provided with at least two rows of seats including a front seat and a rear seat arranged in a front-rear direction, and configured such that relative positions of the front seat and the rear seat in the front-rear direction are changeable. The air bag device is mounted on a rear surface of a seatback of at least the front seat. The air bag device includes an air bag which is deployed rearwardly into an annular shape having a cavity portion therein in a vehicle side view. The air bag is constituted of a plurality of annular-shaped bag portions being arranged and fixed to one another in a vehicle width direction, and configured to allow propagation of gas between the bag portions adjacent to each other.

In this configuration, it is possible to keep the air bag in a state that the cavity portion does not collapse, without a shape holding means such as a partition wall or a tether.

## Claims

1. An air bag device (1) for a vehicle provided with at least two rows of seats including a front seat (100F) and a rear seat (100R) arranged in a front-rear direction, and configured such that relative positions of the front seat and the rear seat in the front-rear direction are changeable, the air bag device being mountable on a rear surface of a seatback of at least the front seat, comprising:
an air bag (10) configured to be deployed rearwardly into a shape having a cavity portion (9) therein in a vehicle side view by gas to be supplied from an inflator (2),
the air bag including shape holding means (14) configured to hold the air bag itself in a shape having the cavity portion therein against a gas pressure of an inner space (10A) of the air bag, when being deployed, **characterized in that**
the air bag includes an outer peripheral portion which constitutes an outer periphery of the air bag, and an inner peripheral portion which defines the inner space in cooperation with the outer peripheral portion, and constitutes an inner periphery of the air bag, and
the shape holding means has two partition walls (14L, 14R) for separating the inner space into three divided spaces (11A, 12A, 13A) arranged in a vehicle width direction by connecting the outer peripheral portion and the inner peripheral portion within the inner space of the air bag at respective predetermined positions in the vehicle width direction,
each of the partition walls is formed with a communication hole (14a) communicating the middle divided space (11A) with the right and left divided spaces (12A, 13A) of the three divided spaces,
the airbag is provided with a gas inlet port (7) for supplying the gas from an inflator (2) into the middle divided space (11A) and a vent hole (15) for discharging gas from the right and left divided spaces (12A, 13A) outwardly in vehicle width directions, respectively.

2. The air bag device according to claim 1, wherein
the air bag includes a middle bag portion (11) having the middle divided space (11A), a right bag portion (12) having the right divided space (12A), and a left bag portion (13) having the left divided space (13A),
the middle bag portion includes a middle bag body portion (16) having a C-shape in the vehicle side view and opening toward a passenger at the rear seat, and
the right bag portion and the left bag portion have an annular shape in the vehicle side view.

## Patentansprüche

1. Airbagvorrichtung (1) für ein Fahrzeug, das mit zumindest zwei Sitzriehen mit einem Vordersitz (100F) und einem Rücksitz (100R) versehen ist, die in einer Richtung von vorne nach hinten angeordnet sind, und derart eingerichtet sind, dass Relativpositionen des Vordersitzes und des Rücksitzes in der Richtung von vorne nach hinten veränderbar sind, wobei die Airbagvorrichtung an einer Rückfläche einer Rückenlehne von zumindest dem Vordersitz montierbar ist, aufweisend:
einen Airbag (10), der eingerichtet ist, sich mittels Gas, das aus einem Gasgenerator (2) zuzuführen ist, nach hinten in eine Form zu entfalten, die in einer Fahrzeugseitenansicht einen Kavitätsabschnitt (9) darin besitzt,
wobei der Airbag ein Formhaltemittel (14) aufweist, das eingerichtet sind, den Airbag bei Entfaltung selbst gegen einen Gasdruck eines Innenraums (10A) des Airbags in einer Form zu halten, die in sich den Kavitätsabschnitt besitzt,
**dadurch gekennzeichnet, dass**
der Airbag einen Außenumfangsabschnitt, der einen Außenumfang des Airbags darstellt, und einen Innenumfangsabschnitt aufweist, der in Zusammenwirkung mit dem Außenumfangsabschnitt den Innenraum definiert und einen Innenumfang des Airbags darstellt; und
das Formhaltemittel zwei Trennwände (14L, 14R) zum Abtrennen des Innenraums in drei Teilräume (11A, 12A, 13A) aufweist, die in einer Fahrzeugbreitenrichtung angeordnet sind, indem der Außenumfangsabschnitt und der Innenumfangsabschnitt innerhalb des Innenraums des Airbags an jeweiligen vorgegebenen Positionen in der Fahrzeugbreitenrichtung verbunden werden,
jede der Trennwände mit einer Kommunikationsöffnung (14a) ausgebildet ist, die den mittleren Teilraum (11A) mit dem rechten und linken Teilraum (12A, 13A) der drei Teilräume kommunizieren lässt,
der Airbag mit einem Gaseinlassstutzen (7) zur Zufuhr des Gases aus einem Gasgenerator (2) in den mittleren Teilraum (11A) und einer Entlüftungsöffnung (15) zum Ausleiten von Gas aus dem rechten bzw. linken Teilraum (12A, 13A) in Fahrzeugbreitenrichtungen nach außen versehen ist.

2. Airbagvorrichtung nach Anspruch 1, wobei
der Airbag einen mittleren Sackabschnitt (11) mit dem mittleren Teilraum (11A), einen rechten Sackabschnitt (12) mit dem rechten Teilraum (12A) und einen linken Sackabschnitt (13) mit dem linken Teilraum (13A) aufweist,
der mittlere Sackabschnitt in einer Seitansicht des Fahrzeugs einen mittleren Sackköperabschnitt (16) mit einer C-Form besitzt, der sich in Richtung eines Fahrgastes auf dem Rücksitz öffnet, und
der rechte Sackabschnitt und der linke Sackabschnitt in einer Seitenansicht des Fahrzeugs eine Ringform besitzen.

## Revendications

1. Dispositif (1) de coussin de sécurité gonflable destiné à un véhicule doté d'au moins deux rangées de sièges comprenant un siège avant (100F) et un siège arrière (100R) agencés dans une direction avant-arrière, et conçus de sorte que les positions relatives du siège avant et du siège arrière dans la direction avant-arrière soient modifiables, le dispositif de coussin de sécurité gonflable pouvant être monté sur une surface arrière d'un dossier de siège d'au moins le siège avant, le dispositif comprenant :
un coussin de sécurité gonflable (10) conçu pour être déployé vers l'arrière à une forme comportant une partie cavité (9), dans une vue latérale du véhicule, au moyen d'un gaz à alimenter à partir d'un gonfleur (2),
le coussin de sécurité gonflable comprenant un moyen de maintien de forme (14) conçu pour maintenir le coussin de sécurité gonflable dans une forme comportant la partie cavité, contre une pression de gaz d'un espace interne (10A) du coussin de sécurité gonflable, lors de son déploiement, **caractérisé en ce que**
le coussin de sécurité gonflable comprend une partie périphérique externe constituant une périphérie externe du coussin de sécurité gonflable, et une partie périphérique interne définissant l'espace interne en coopération avec la partie périphérique externe, et constituant une périphérie interne du coussin de sécurité gonflable, et
le moyen de maintien de forme comporte deux cloisons de séparation (14L, 14R) permettant de séparer l'espace interne en trois espaces divisés (11A, 12A, 13A) agencés dans une direction transversale du véhicule, au moyen de la liaison de la partie périphérique externe et de la partie périphérique interne, à l'intérieur de l'espace interne du coussin de sécurité gonflable, au niveau de certaines positions prédéfinies respectives dans la direction transversale du véhicule,
chaque cloison de séparation est pourvue d'un trou de communication (14a) mettant en communication l'espace divisé central (11A) avec les espaces divisés droit et gauche (12A, 13A) parmi les trois espaces divisés,
le coussin de sécurité gonflable est muni d'un orifice d'entrée de gaz (7) permettant d'alimenter en gaz, en provenance d'un gonfleur (2), l'espace divisé central (11A), et un trou d'évent (15) permettant d'évacuer le gaz à partir des espaces divisés droit et gauche (12A, 13A) vers l'extérieur dans les directions transversales du véhicule, respectivement.

2. Le dispositif de coussin de sécurité gonflable selon la revendication 1, dans lequel
le coussin de sécurité gonflable comprend une partie centrale (11) de coussin comportant l'espace divisé central (11A), une partie droite (12) de coussin comportant l'espace divisé droit (12A) et une partie gauche (13) de coussin comportant l'espace divisé gauche (13A),
la partie centrale du coussin comprend une partie corps centrale (16) de coussin présentant une forme en C dans la vue latérale du véhicule, et ouvrant vers un passager au niveau du siège arrière, et
la partie droite du coussin et la partie gauche du coussin présentent une forme annulaire dans la vue latérale du véhicule.
